# DEMANDE DE BREVET EUROPEEN

(11) **EP 4 636 876 A1**
(43) Date de publication de la demande: **22.10.2025**
(21) Numéro de dépôt: 24305605.8
(22) Date de dépôt: 17.04.2024
(51) Int. Cl.: H01M 10/04, H01M 50/103, H01M 50/242, H01M 50/474, H01M 50/477

(54) **CELLULE COMPRENANT DES PLAQUES DE COMPRESSIONS, PROCÉDÉ DE FABRICATION ET BATTERIE ASSOCIÉS**

(71) Demandeur: Automotive Cells Company SE, 33520 Bruges (FR)
(72) Inventeur: ORIGUCHI, Masato, 78120 RAMBOUILLET (FR); AUTRET, Stéphane, 33880 BAURECH (FR); FIORDILINO, Alberto, 70125 BARI (IT)
(74) Mandataire: Lavoix

(57) **Abrégé**

La cellule (12) de batterie (10) comprend : un boitier externe (18), un empilement d'éléments électrochimiques (14), et un boitier intermédiaire (16) présentant deux faces principales (20). Chaque face principale (20) porte une plaque de compression (22) exerçant une pression selon une première direction transversale (T1) sur chaque face principale, transmettant la pression selon la première direction transversale (T1) à l'empilement d'éléments électrochimiques (14), lorsque l'empilement d'éléments électrochimiques (14) se dilate provoquant la déformation du boitier externe (18) durant la durée de vie de la cellule (12).

## Description

La présente invention concerne une cellule de batterie. L'invention concerne également une batterie comportant au moins une telle cellule de batterie.

L'invention concerne en outre un procédé de fabrication d'une telle cellule pour la fabrication d'une batterie.

Les batteries sont utilisées dans des nombreux domaines techniques, tels que les voitures hybrides et électriques, le stockage d'énergies renouvelables ou encore les objets connectés.

Une cellule de batterie comprend généralement une pluralité d'électrodes positives intercalés avec une pluralité d'électrodes négatives et une pluralité de séparateurs, formant un empilement d'éléments électrochimiques. Les électrodes positives sont reliées entre elles et à une borne positive (la cathode) de la cellule, et les électrodes négatives sont reliées entre elles et à une borne négative (l'anode) de la cellule.

Une batterie comprend généralement plusieurs cellules connectées électriquement les unes aux autres. Par exemple, la pluralité de cellules est disposée en un ou plusieurs modules et chaque module comprend une ou plusieurs cellules électrochimiques.

L'anode est généralement principalement fabriquée en graphite de carbone et comporte plusieurs couches de graphène. Or, le graphite de carbone a tendance à enfler lorsqu'il est intercalé avec des ions de lithium entre les couches de graphène, si bien que la distance entre les couches de graphène augmente lorsque le graphite de carbone enfle. Après une période de décharge de la cellule, le mélange de graphène et d'ions de lithium se rétrécit, au fur et à mesure que les ions lithium sortent, mais l'anode ne revient pas totalement à son épaisseur initiale et sa structure n'est plus la même en raison du gonflement des particules de graphite. Ainsi, au fur et à mesure que le cycle de charge et décharge de la cellule est répété, la cellule augmente son épaisseur.

Les matériaux de fabrication de la cathode présentent quant à eux une tendance à se rétrécir, cette tendance étant donc opposée à celle du graphite. Cependant, son effet est beaucoup moindre que celui du graphite. Par conséquent, la tendance de l'empilement d'éléments électrochimiques, et donc de la cellule est à s'enfler, ou se dilater.

La cellule se dilate continuellement depuis sa fabrication jusqu'à sa fin de vie. Cependant, lors de la fabrication, la cellule se dilate une première fois lors de la toute première charge de la cellule, c'est-à-dire avant la période de fonctionnement, l'épaisseur de la cellule à ce moment précis correspond à l'épaisseur initiale. Ensuite, la cellule se dilate pendant les cycles de charge et décharge de la cellule durant sa période de fonctionnement.

A la fin de la durée de vie de la cellule, elle a augmenté son épaisseur d'environ 1 0% par rapport à son épaisseur initiale. Cette dilatation est trop importante et entraîne des effets secondaires, tels que la dégradation de la cellule, ou encore un aspect extérieur induisant l'utilisateur en erreur. Les producteurs de batterie voudraient ne pas devoir se soucier de ces effets secondaires.

Dans le cas des cellules à géométrie prismatique, le boitier externe est fait généralement en aluminium et possède un volume interne fixe. Lorsque la cellule se dilate durant le fonctionnement de la cellule, le boitier externe se déforme donc en présentant une convexité tournée vers le volume extérieur du boitier externe.

Il est possible d'utiliser un empilement d'éléments électrochimiques présentant une épaisseur réduite pour augmenter la marge entre l'empilement d'éléments électrochimiques et le boitier externe.

Cependant, il est indispensable d'assurer un bon contact entre l'anode et la cathode, puisqu'un mauvais contact entraine une diffusion irrégulière des ions de lithium à l'intérieur de l'empilement d'éléments électrochimiques et empêche une augmentation de la résistance entre l'anode et la cathode. En effet, si la résistance entre l'anode et la cathode était trop élevée, alors la différence de potentiel fixant le fonctionnement de la cellule serait plus importante, et il y aurait une formation de lithium métallique à la surface de contact de l'anode avec l'électrolyte et le séparateur.

On connaît déjà, dans l'état de la technique, des méthodes pour garantir un bon contact des électrodes. Par exemple, l'empilement d'éléments électrochimiques est fabriqué en utilisant un séparateur adhésif à la place d'un séparateur classique pour fabriquer.

Toutefois, ces méthodes sont très onéreuses et/ou rallongent le temps nécessaire à la fabrication d'une cellule. Par exemple, les séparateurs adhésifs empêchent partiellement la diffusion de l'électrolyte et donc l'étape d'imprégnation de l'électrolyte est plus longue. En outre, l'utilisation d'un empilement d'éléments électrochimiques avec une épaisseur réduite, pour augmenter la marge laissée entre l'empilement d'éléments électrochimiques et le boitier externe, réduit la densité énergétique de la cellule.

Un but de l'invention est alors de proposer une batterie présentant une pression homogène sur toute la surface des électrodes afin de garantir une diffusion des ions et une réaction électrochimique uniforme à l'intérieur de l'empilement d'éléments électrochimiques, suite à la dilatation de la cellule lors de sa période de fonctionnement.

A cet effet, l'invention a pour objet une cellule de batterie comprenant : un boitier externe, un empilement d'éléments électrochimiques, et un boitier intermédiaire présentant deux faces principales, caractérisée en ce que chaque face principale porte une plaque de compression, chaque plaque de compression recouvrant la face principale correspondante et étant fixée à cette face principale, ladite plaque de compression exerçant une pression selon une première direction transversale sur chaque face principale, transmettant la pression selon la première direction transversale à l'empilement d'éléments électrochimiques, lorsque l'empilement d'éléments électrochimiques se dilate provoquant la déformation du boitier externe durant la durée de vie de la cellule.

La cellule selon l'invention permet de maintenir un bon contact entre l'anode et la cathode. La cellule permet également de réduire la pression aux endroits précis où la dilatation est plus importante. Cette dernière caractéristique permet d'avoir une résistance correcte et donc une diffusion uniforme des ions à l'intérieur de l'empilement d'éléments électrochimiques sur toute sa longueur.

Suivant d'autres aspects avantageux de l'invention, le procédé comprend une ou plusieurs des caractéristiques suivantes, prises isolément ou suivant toutes les combinaisons techniquement possibles :
- Le boitier intermédiaire est formé par un film replié et, pour chaque face principale, de la plaque de compression correspondante, fixée à cette face principale.
- La plaque de compression présente une épaisseur aux bords étant réduite progressivement selon une seconde direction transversale perpendiculaire à la première direction transversale.
- La plaque de compression présente une forme trapézoïdale selon un plan.
- Chaque plaque de compression présente une épaisseur selon la première direction transversale comprise entre 0,5% et 2% de l'épaisseur de l'empilement d'éléments électrochimiques.
- Chaque plaque de compression est réalisée par laminage puis usinage d'une tôle.

L'invention concerne également une batterie, comprenant au moins une cellule telle que définie précédemment.

L'invention concerne également un procédé de fabrication d'une cellule de batterie telle que définie précédemment, comprenant les étapes suivantes :
- fixation des plaques de compression sur les deux faces principales,
- fourniture du boitier externe, de l'empilement d'éléments électrochimiques, et du boitier intermédiaire, et
- formation de la cellule comprenant les sous étapes de :
   a) compression du boitier externe, et
   b) dilatation de l'empilement d'éléments électrochimiques.

L'invention apparaîtra plus clairement à la lecture de la description qui va suivre, donnée uniquement à titre d'exemple non limitatif, et faite en référence aux dessins dans lesquels :
[Fig. 1] la figure 1 est une représentation schématique d'une batterie comprenant plusieurs cellules ;
[Fig. 2] la figure 2 est une vue en perspective d'un boitier intermédiaire ;
[Fig. 3] la figure 3 est une représentation schématique d'une cellule avant la première dilatation, durant l'étape de fabrication ;
[Fig. 4] la figure 4 est une représentation schématique d'une cellule avant la première dilatation, durant l'étape de fabrication, après la compression du boitier externe de la cellule ;
[Fig. 5] la figure 5 est une représentation schématique d'une cellule après la première dilatation, à la fin de l'étape de fabrication ; et
[Fig. 6] la figure 6 est une représentation schématique d'une cellule à la fin de sa durée de vie.

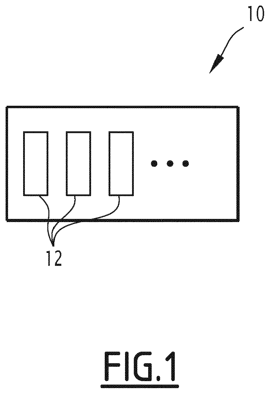

Sur la figure 1 est représenté une batterie 10 comportant une pluralité de cellules 12.

La batterie 10 peut être n'importe quel type, de préférence la batterie 10 est une batterie en lithium. La batterie 10 possède plusieurs cellules 12 connectés électriquement entre elles.

En complément facultatif, les cellules 12 sont toutes identiques. En variante (non représentée), seulement une cellule 12 est nécessaire pour faire la batterie 10. Par conséquent, seulement une cellule 12 sera décrite dans la description qui va suivre.

La cellule 12 de batterie 10 comprend un empilement d'éléments électrochimiques 14. En variante non représentée, l'empilement d'éléments électrochimiques 14 est fabriqué à partir d'une pluralité d'électrodes positives intercalés avec une pluralité d'électrodes négatives et une pluralité de séparateurs imprégnés avec un électrolyte.

L'empilement d'éléments électrochimiques 14 est par exemple de géométrie prismatique, et plus précisément de forme parallélépipédique. En effet, la géométrie prismatique permet d'avoir l'empilement d'éléments électrochimiques 14 avec une densité énergétique élevée.

La cellule 12 de batterie 10 comprend également un boitier intermédiaire 16 apte à contenir l'empilement d'éléments électrochimiques 14 et un boitier externe 18 apte à contenir le boitier intermédiaire 16 et l'empilement d'éléments électrochimiques 14. Le boitier externe 18 comporte généralement un couvercle comprenant une borne positive et une borne négative.

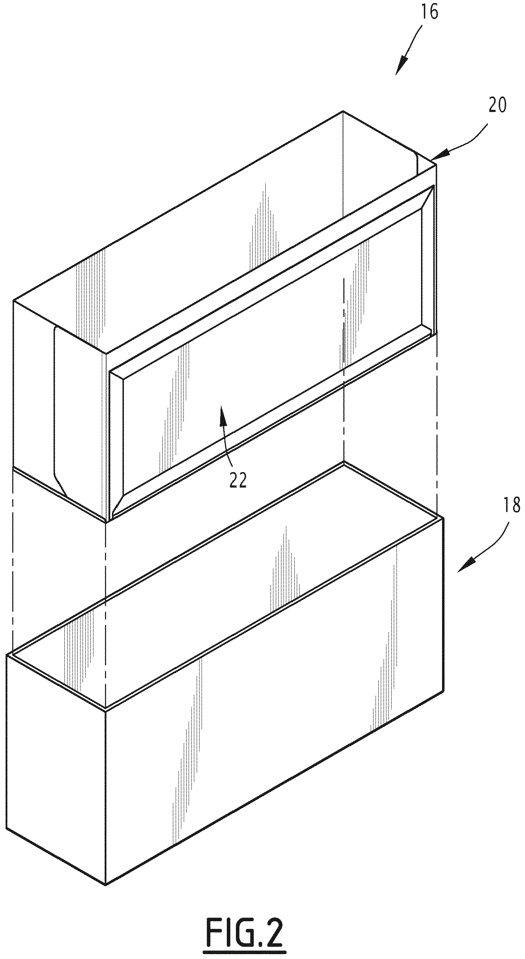

Le boitier intermédiaire 16 comporte deux faces, qui sont, par exemple, les faces principales 20 du boitier intermédiaire 16, et chaque face principale 20 porte une plaque de compression 22. Le boitier intermédiaire 16 comprend en outre deux autres faces latérales et une face inférieure afin de former un boitier intermédiaire 16 rectangulaire, comme le montre la figure 2. Par exemple, le boitier intermédiaire 16 est fait en matériau plastique tel que du polypropylène afin d'isoler la cellule électriquement. Le boitier intermédiaire 16 est par exemple formé par un film plastique plié.

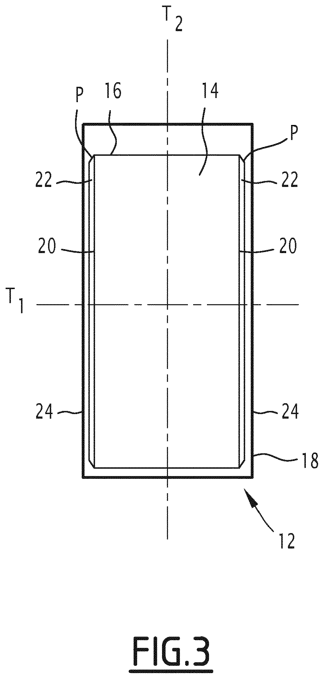

Le fonctionnement de la cellule 12 de batterie 10 selon l'invention va être à présent décrit en regard des figures 3 à 5 représentant les étapes de fabrication d'une cellule 12 et la différence de dilatation entre la mise en fonctionnement de la cellule 12 et sa fin de durée de vie.

Le procédé de fabrication de la cellule 12 comprend les étapes suivantes :
- fixation des plaques de compression 22,
- fourniture du boitier externe 18, de l'empilement d'éléments électrochimiques 14, et du boitier intermédiaire 16, et
- formation de la cellule 12.

Lors de l'étape de fixation, les deux plaques de compression 22 sont fixées aux deux faces principales 20 respectivement. Chaque plaque de compression 22 est fixée, par exemple, par thermo soudage à la face principale 20 correspondante. Dans un exemple de mode de réalisation, le boitier intermédiaire 16 est formé par un film replié où, pour chaque face principale 20, la plaque de compression 22 correspondante est fixée à cette face principale 20. De préférence, chaque plaque de compression 22 recouvre la totalité de la face principale 20 correspondante.

Chaque plaque de compression 22 exerce une pression selon une première direction transversale T1 sur chaque face principale 20, transmettant la pression selon la première direction transversale T1 à l'empilement d'éléments électrochimiques 14. Chaque plaque de compression 22 présente avantageusement une forme trapézoïdale dans un plan P perpendiculaire à la face principale 20 correspondante. Préférablement, chaque plaque de compression 22 présente une épaisseur selon la première direction transversale T1 comprise entre 0,5% et 2% de l'épaisseur de l'empilement d'éléments électrochimiques 14.

Dans un exemple de mode de réalisation, la plaque de compression 22 présente une épaisseur aux bords étant réduite progressivement selon une seconde direction transversale T2 perpendiculaire à T1 permettant d'obtenir la forme trapézoïdale dans le plan P, et la pression uniforme sensiblement égale à une valeur donnée. Cette dernière caractéristique garantit une diffusion d'ions dans l'empilement d'éléments électrochimiques 14 de façon régulière.

De préférence, chaque plaque de compression 22 est réalisée par un procédé de laminage puis d'usinage d'une tôle.

Par exemple, la figure 3 montre la cellule à la fin de cette étape.

Ensuite, lors de l'étape de fourniture, le boitier externe 18 est obtenu. Par exemple, le boitier externe 18 est fabriqué en aluminium ou en acier. En complément facultatif, il sert d'une part à contenir le boitier intermédiaire 16 contenant l'empilement d'éléments électrochimiques 14, d'autre part à protéger l'empilement d'éléments électrochimiques 14 des perturbations extérieures. A titre d'exemple, il peut être formé par un film plastique plié.

Par exemple, la fabrication de l'empilement d'éléments électrochimiques 14 consiste dans un premier temps à couper individuellement les feuilles d'anode, de cathode, et du séparateur. En plaçant le séparateur entre l'anode et la cathode on obtient un motif .

À titre facultatif, les électrodes positives sont reliées à la borne positive (non représentée) du couvercle (non représenté), et les électrodes négatives reliées à la borne négative (non représentée) du couvercle. Pour réaliser ces connexions, les électrodes comprennent des portions qui dépassent de l'empilement et qui sont par exemple soudées les unes aux autres et sur un organe de contact, lequel est soudé sur l'une des bornes.

En supplément optionnel, le boitier intermédiaire 16 est fabriqué par thermo soudage. Ainsi, les deux faces principales 20 sont par exemple thermo soudées aux autres faces latérales et à la face inférieure pour obtenir le boitier intermédiaire 16. D'autres modes de réalisation peuvent être utilisés pour la fabrication du boitier intermédiaire 16.

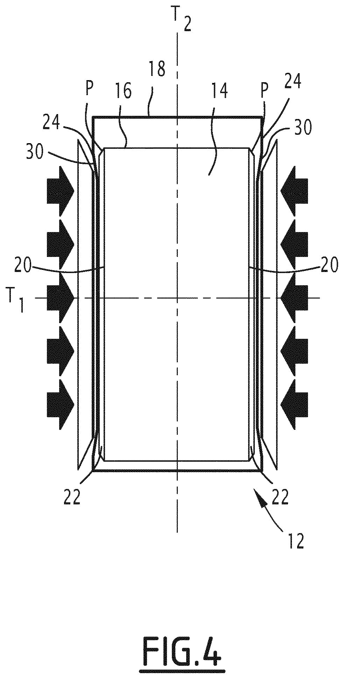

L'étape de formation de la cellule 12 comprend par exemple une première phase avec un ou plusieurs cycles de charge et décharge à des niveaux de courant différents selon le type d'empilement d'éléments électrochimiques 14 utilisé. Pendant cette phase, une de compression est appliqué au boitier externe 18 dans laquelle deux faces latérales 24 du boitier externe 18 sont déformés en présentant une convexité 30 tournée vers l'empilement d'éléments électrochimiques 14, comme le montre la figure 4 à titre d'exemple.

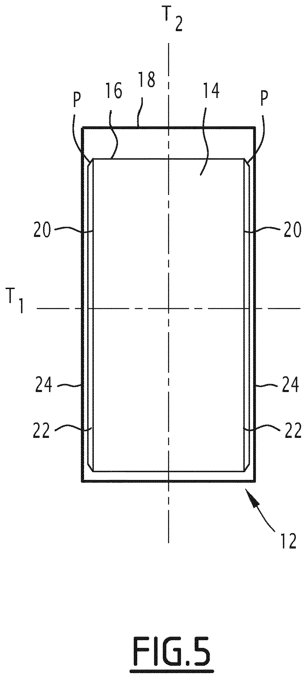

Ensuite, durant le(s) cycle(s) de charge et décharge, une dilatation de l'empilement d'éléments électrochimiques 14 a lieur dans laquelle les faces latérales 24 reviennent à leurs positions d'origines, avant la mise en fonctionnement de la cellule 12, comme le montre la figure 5, à titre d'exemple. A la fin de l'étape de formation, l'épaisseur de la cellule 12 présente une épaisseur initiale.

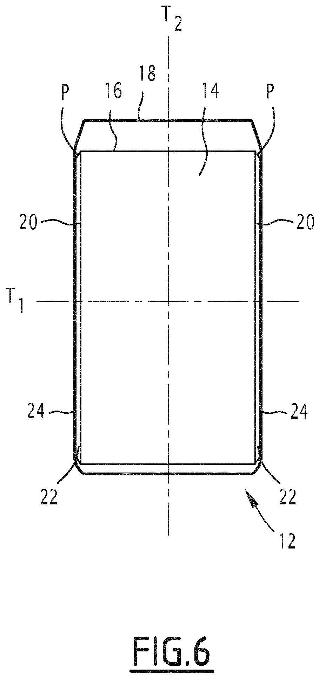

Enfin, lors de la durée de vie de la cellule 12, l'empilement d'éléments électrochimiques 14 se dilate provoquant la déformation du boitier externe 18. C'est-à-dire, à chaque période de charge, la cellule 12 se dilate plus que ce que la cellule se rétrécit lors de la période de décharge. Ainsi, lors de chaque cycle de charge et décharge, la cellule 12 se dilate de plus en plus. A la fin de la durée de vie par exemple, la cellule 12 est déformé, comme le montre la figure 6 à titre d'exemple. A la fin de cette phase, l'épaisseur de la cellule 12 présente une épaisseur supérieure à l'épaisseur initiale.

Grâce aux caractéristiques décrites ci-dessus, en particulier grâce à la fixation des plaques de compression 22 dans les deux faces principales 20 du boitier intermédiaire 16, permettent de maintenir une pression homogène sur toute la surface des électrodes afin de garantir une diffusion des ions et une réaction électrochimique uniforme à l'intérieur de l'empilement d'éléments électrochimiques 14 sur toute sa longueur.

En effet, la dilatation au centre de l'empilement d'éléments électrochimiques 14 est beaucoup plus importante que dans les extrémités de l'empilement d'éléments électrochimiques 14. Cette différence de dilatation se traduit en une pression du boitier externe 18 vers l'empilement d'éléments électrochimiques 14 selon la première direction transversale T1 très variable entre le centre de l'empilement d'éléments électrochimiques 14 et les extrémités de l'empilement d'éléments électrochimiques 14.

L'utilisation des plaques de compression 22 permet de supprimer cette différence de pression. Cela empêche que les pores de l'empilement d'éléments électrochimiques 14 se rétrécissent et donc les ions à l'intérieur de l'empilement d'éléments électrochimiques 14 de se diffuser.

## Revendications

1. Cellule (12) de batterie (10) comprenant : un boitier externe (18), un empilement d'éléments électrochimiques (14), et un boitier intermédiaire (16) présentant deux faces principales (20),
**caractérisée en ce que** chaque face principale (20) porte une plaque de compression (22), chaque plaque de compression (22) recouvrant la face principale (20) correspondante et étant fixée à cette face principale (20), ladite plaque de compression (22) exerçant une pression selon une première direction transversale (T1) sur chaque face principale, transmettant la pression selon la première direction transversale (T1) à l'empilement d'éléments électrochimiques (14), lorsque l'empilement d'éléments électrochimiques (14) se dilate provoquant la déformation du boitier externe (18) durant la durée de vie de la cellule (12).

2. Cellule (12) de batterie (10) selon la revendication 1, dans laquelle le boitier intermédiaire (16) est formé par un film replié et, pour chaque face principale (20), de la plaque de compression correspondante, fixée à cette face principale (20).

3. Cellule (12) de batterie (10) selon la revendication 1 ou 2, dans laquelle la plaque de compression (22) présente une épaisseur aux bords étant réduite progressivement selon une seconde direction transversale (T2) perpendiculaire à la première direction transversale (T1).

4. Cellule (12) de batterie (10) selon l'une quelconque des revendications précédentes, dans laquelle la plaque de compression présente (22) une forme trapézoïdale selon un plan (P).

5. Cellule (12) de batterie (10) selon l'une quelconque des revendications précédentes, dans laquelle chaque plaque de compression (22) présente une épaisseur selon la première direction transversale (T1) comprise entre 0,5% et 2% de l'épaisseur de l'empilement d'éléments électrochimiques (14).

6. Cellule (12) de batterie (10) selon l'une quelconque des revendications précédentes, dans laquelle chaque plaque de compression (22) est réalisée par laminage puis usinage d'une tôle.

7. Batterie (10), comprenant au moins une cellule (12) selon l'une quelconque des revendications précédentes.

8. Procédé de fabrication d'une cellule (12) de batterie (10) comme décrit l'une quelconque des revendications 1 à 6, comprenant les étapes de :
- fixation des plaques de compression (22) sur les deux faces principales (20),
- fourniture du boitier externe (18), de l'empilement d'éléments électrochimiques (14), et du boitier intermédiaire (16), et
- formation de la cellule (12) comprenant les sous étapes de :
a) compression du boitier externe (18), et
b) dilatation de l'empilement d'éléments électrochimiques (14).
